# EUROPÄISCHE PATENTSCHRIFT

(11) **EP 2 731 227 B1**
(45) Veröffentlichungstag und Bekanntmachung des Hinweises auf die Patenterteilung: **01.05.2019**
(21) Anmeldenummer: 13184249.4
(22) Anmeldetag: 13.09.2013
(51) Int. Cl.: H02J 7/02, H02J 7/04, B60L 50/51

(54) **Vorrichtung und Verfahren zum Laden eines elektrischen Energiespeichers aus einer Wechselspannungsquelle**
Device and method for charging an electric energy store from an alternating current source
Dispositif et procédé de chargement d'un accumulateur d'énergie électrique à partir d'une source de courant alternatif

(30) Priorität: 08.11.2012 DE 102012220376
(43) Veröffentlichungstag der Anmeldung: 14.05.2014
(73) Patentinhaber: ROBERT BOSCH GMBH, 70442 Stuttgart (DE)
(72) Erfinder: Schillinger, Bertram, 77815 Buehl (DE)

(56) Entgegenhaltungen:
- EP-A2- 0 834 977
- EP-A2- 2 500 211
- WO-A1-2014/056664
- DE-A1-102009 044 281
- DE-A1-102009 052 680
- JP-A- 2011 015 495

## Beschreibung

Die vorliegende Erfindung betrifft eine Vorrichtung zum Laden eines elektrischen Energiespeichers aus einer Wechselspannungsquelle gemäß dem Oberbegriff des Anspruchs 1, wie aus der JP 2011 015 495 A bekannt. Die WO2014/056664A1 offenbart eine Vorrichtung und ein Verfahren zum Laden eines elektrischen Energiespeichers aus einer dreiphasigen Wechselspannungsquelle.

DE 195 235 76 A1 beschreibt ein Wechselspannungs-Gleichspannungsnetzteil und ein Verfahren zum Umwandeln einer Wechselspannung in eine Gleichspannung in Hochspannungssystemen. Das dort beschriebene Wechselspannungs-Gleichspannungsnetzteil umfasst einen Halbleiterschalter, welcher auf einer Niedrigspannungsseite des Rücklaufwandlers eine niedrigere Durchbruchspannung aufweist als ein Halbleiterschalter auf einer Hochspannungsseite. Die niedrigere Durchbruchspannung ist mittels eines Nebenschlußreglers erzielbar, welcher eine Klemmspannung auf der Niedrigspannungsschalterseite reguliert.

### Offenbarung der Erfindung

Die Erfindung schafft eine Vorrichtung zum Laden eines elektrischen Energiespeichers aus einer Wechselspannungsquelle gemäß Anspruch 1.

Bevorzugte Weiterbildungen der Erfindung sind Gegenstand von Unteransprüchen.

Eine bevorzugte Ausführungsform der erfindungsgemäßen Vorrichtung ist dadurch gekennzeichnet, dass jeweils eine Wicklung eines dreiphasigen Elektromotors mit jeweils einem Verbindungspunkt zweier Schalter einer Halbbrücke der Umrichtereinrichtung verschaltet ist. Dies bewirkt vorteilhaft eine Verwendung einer Wicklungsinduktivität von Motorwicklungen eines bereits vorhandenen Elektromotors. Vorteilhaft kann dadurch eine externe Induktivität kleiner ausgebildet sein oder unter Umständen sogar ganz entfallen.

Eine bevorzugte Ausführungsform der erfindungsgemäßen Vorrichtung zeichnet sich dadurch aus, dass zweite Schalter einer zweiten und einer dritten Halbbrücke der Umrichtereinrichtung synchronisiert schaltbar sind. Dies hat vorteilhaft eine geringere Belastung der Schalter der Umrichtereinrichtung zur Folge, was sich in einer erhöhten Betriebsdauer niederschlägt. Vorteilhaft können die Schalter der Umrichtereinrichtung dadurch auch höher getaktet werden.

Eine bevorzugte Ausführungsform der erfindungsgemäßen Vorrichtung zeichnet sich dadurch aus, dass die zweiten Schalter der zweiten und dritten Halbbrücke der Umrichtereinrichtung überlappend schaltbar sind. Dies bewirkt aufgrund der erhöhten Schaltfrequenz vorteilhaft eine Verringerung von Welligkeit bzw. Rippleverkleinerung des Ladestroms. Die höhere Taktfrequenz der Schalter resultiert aus einer geringeren Verlustleistung aufgrund einer geringeren Strombelastung der einzelnen Schalter bewirkt. Vorteilhaft werden dadurch also Gesamtverluste (mit Durchlassverlusten und Schaltverlusten) verringert.

### Vorteile der Erfindung

Als besonders vorteilhaft wird bei der Erfindung angesehen, dass zum Laden des elektrischen Energiespeichers in einem Ladebetrieb des Elektrofahrzeugs ein bereits vorhandener Umrichter verwendet werden kann. Vorteilhaft kann dadurch ein herkömmlicher Zwischenkreiskondensator entfallen. Zudem wird der Umrichter auch zu einer Realisierung einer Oberwellenverbesserungsvorrichtung verwendet, so dass die herkömmliche Korrektureinrichtung entfallen kann. Vorteilhaft kann auf diese Weise eine erfindungsgemäße Ladevorrichtung wesentlich einfacher und kostengünstiger ausgestaltet sein. Mittels der galvanischen Trennung durch die Transformatoreinrichtung ist zudem ein Sicherheitsaspekt für Anwender vorteilhaft erhöht.

Weitere Merkmale und Vorteile der vorliegenden Erfindung werden nachfolgend anhand von Ausführungsformen mit Bezug auf Figuren erläutert. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen und sind nicht notwendigerweise als detailgetreue Schaltbilder zu verstehen. In den Figuren bezeichnen gleiche Bezugszeichen gleiche bzw. funktionsgleiche Elemente.

### Kurze Beschreibung der Figuren

Es zeigen:
- Fig. 1: ein prinzipielles Blockschaltbild einer Ladevorrichtung gemäß Stand der Technik;
- Fig. 2: ein prinzipielles Blockschaltbild einer ersten Ausführungsform einer erfindungsgemäßen Vorrichtung zum Laden eines elektrischen Energiespeichers;
- Fig. 2a...2d: prinzipielle zeitliche Verläufe von elektrischen Größen innerhalb der Vorrichtung von Fig. 2
- Fig. 3: ein elektrisches Ersatzschaltbild der erfindungsgemäßen Vorrichtung;
- Fig. 4: ein Zeigerdiagramm mit Spannungen und Strömen innerhalb der erfindungsgemäßen Vorrichtung;
- Fig. 5: ein prinzipielles Zeitdiagramm mit Signalverläufen von Strömen und Spannungen innerhalb der erfindungsgemäßen Vorrichtung; und
- Fig. 6: ein prinzipielles Ablaufdiagramm einer Ausführungsform des erfindungsgemäßen Verfahrens.

### Ausführungsformen der Erfindung

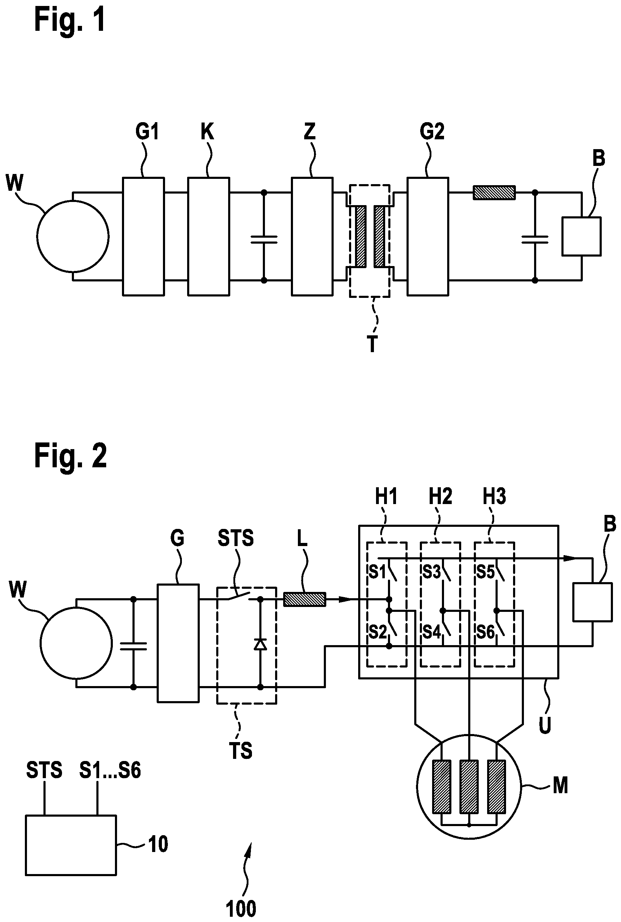

Fig. 1 zeigt ein prinzipielles Blockschaltbild einer konventionellen Vorrichtung zum Laden eines elektrischen Energiespeichers B (z.B. eine Hochvoltbatterie eines Elektrofahrzeugs) aus einer Wechselspannungsquelle W. Dabei ist eine erste Gleichrichtereinrichtung G1 elektrisch an die Wechselspannungsquelle W angeschlossen. Die Wechselspannung wird mittels der ersten Gleichrichtereinrichtung G1 und eines Zwischenkreiskondensators in eine Gleichspannung umgewandelt. Eine elektrische Zerhackereinrichtung Z zerhackt die gleichgerichtete Wechselspannung, um diese über eine Transformatoreinrichtung T mit einem definierten Wicklungsverhältnis zu übertragen. Nach der Transformatoreinrichtung T richtet eine zweite Gleichrichtereinrichtung G2 die zerhackte Spannung wieder gleich. Ein nachfolgend geschalteter Tiefpassfilter mit einer Induktivität und einem Kondensator filtert restliche Oberwellen aus der gleichgerichteten Spannung.

Um genormte Erfordernisse bezüglich Oberwellenemissionen in das öffentliche Wechselspannungsnetz einzuhalten, ist zwischen der ersten Gleichrichtereinrichtung G1 und der elektrischen Zerhackereinrichtung Z eine Korrektureinrichtung K geschaltet, die im Wesentlichen dafür sorgt, dass der aus der Wechselspannungsquelle W entnommene Strom in Phase mit der Wechselspannung aus der Wechselspannungsquelle W ist.

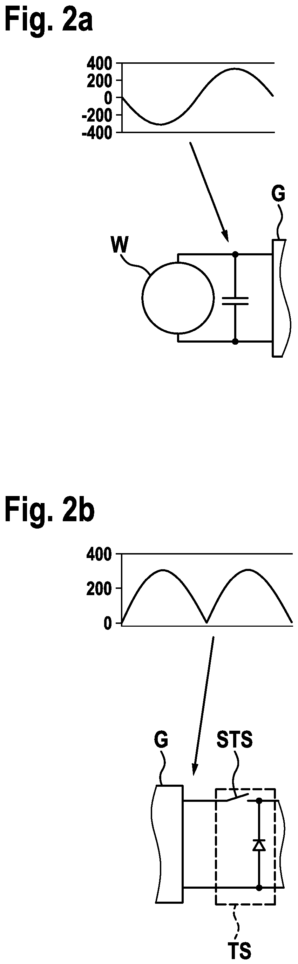

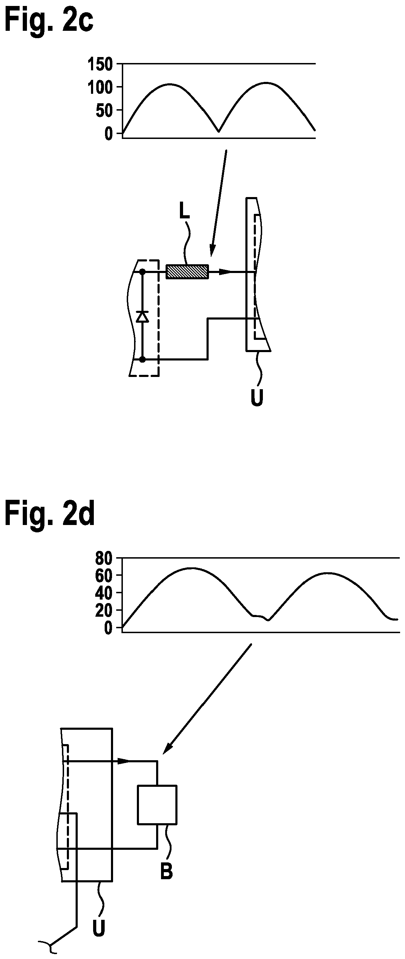

Fig. 2 zeigt ein prinzipielles Blockschaltbild einer ersten Ausführungsform der erfindungsgemäßen Vorrichtung 100 zum Laden eines elektrischen Energiespeichers. Die Vorrichtung 100 weist eine Gleichrichtereinrichtung G auf, die elektrisch an eine Wechselspannungsquelle W angeschaltet ist. Ein parallel zur Wechselspannungsquelle W bzw. zur Gleichrichtereinrichtung G verschalteter Pufferkondensator hat die Aufgabe, elektrische Spannungseinbrüche beim nachfolgend erläuterten Schalten eines Schalters STS einer Tiefsetzsteller- bzw. Stromstellereinrichtung TS zu verhindern. Die Stromstellereinrichtung TS ist mit der Gleichrichtereinrichtung G verschaltet und umfasst einen Schalter STS und eine in Sperrrichtung betriebene Diode. Eine Induktivität L ist zwischen der Stromstellereinrichtung TS und einem Verbindungspunkt zweier Schalter S1, S2 einer ersten Halbbrücke H1 einer Umrichtereinrichtung U (z.B. ein B6-Inverter) verschaltet.

Die Umrichtereinrichtung U weist noch eine weitere Halbbrücke H2 mit einem Schalterpaar S3, S4 und eine weitere Halbbrücke H3 mit einem Schalterpaar S5, S6 auf. An die Verbindungspunkte der Schalter S1...S6 der genannten Halbbrücken H1, H2, H3 ist jeweils eine Wicklungsinduktivität eines Elektromotors M verschaltet, der in einem Fahrbetrieb des Elektrofahrzeugs (nicht dargestellt) mittels der Umrichtereinrichtung U angesteuert wird. Die Funktionsweise des Ansteuerns des Elektromotors M mittels der Umrichtereinrichtung U ist an sich bekannt und wird hier deshalb nicht näher beschrieben. An einen Ausgang der Umrichtereinrichtung U ist eine elektrische Energiespeichereinrichtung B zur Speicherung von elektrischer Energie angeschaltet.

Mittels der Gleichrichtereinrichtung G wird die Wechselspannung U_{AC} der Wechselspannungsquelle W zunächst gleichgerichtet.

Aufgrund von mittels Sensoren (nicht dargestellt) erfassten Werten bzw. Verläufen der Spannung U_{AC} der Wechselspannungsquelle, einem Strom durch die Induktivität L und einer elektrischen Spannung des elektrischen Energiespeichers B sind unterschiedliche Schaltszenarien vorgesehen. Dabei wird zum Steuern der genannten Schalter STS, S1...S6 eine Steuerungseinrichtung 10 verwendet, welche aufgrund der genannten elektrischen Größen die Schalter S1...S6 der Umrichtereinrichtung U und den Schalter STS der Stromstellereinrichtung TS ansteuert.

Im Falle, dass die Spannung U_{AC} der Wechselspannungsquelle W größer ist als die elektrische Spannung der elektrischen Energiespeichers B, übernimmt die Stromstellereinrichtung TS die Funktion eines Heruntersetzens der gleichgerichteten Spannung (Tiefsetzsteller). Zu diesem Zweck wird der Schalter STS der Stromstellereinrichtung TS mit einer geeigneten Taktfrequenz, beispielsweise mit ca. 10 kHz getaktet. Der Pufferkondensator übernimmt eine Pufferung der Eingangswechselspannung. Die nachgeschaltete Umrichtereinrichtung U realisiert funktional eine Hochsetzstellertopologie, wobei mittels eines getakteten Betätigens des zweiten Schalters S2 der ersten Halbbrücke H1 und des Schalters STS der Stromstellereinrichtung TS eine Gegenspannung nach der Induktivität L aufgebaut wird, die einen Ladestrom für den elektrischen Energiespeicher B über eine parallel zum Schalter S1 geschaltete Freilaufdiode (nicht dargestellt) treibt.

Auch im Falle, dass die Netzspannung U_{AC} kleiner als die Spannung des elektrischen Energiespeichers B ist, fungiert die Umrichtereinrichtung U als Hochsetzsteller. In diesem Fall bleibt allerdings der Schalter STS der Stromstellereinrichtung TS permanent geschlossen und es wird lediglich der zweite Schalter S2 der ersten Halbbrücke H1 getaktet.

Im Ergebnis ist also ein Laden des elektrischen Energiespeichers B in einem weiten elektrischen Spannungsbereich des elektrischen Energiespeichers B und des Wechselspannungsnetzes ermöglicht.

Mehrere Diagramme innerhalb von Fig. 2 zeigen Zeitverläufe von elektrischen Größen innerhalb der Vorrichtung 100, wobei die Positionen der Vorrichtung 100, an denen die jeweilige Größe auftritt, mit Pfeilen gekennzeichnet sind.
Fig. 2a zeigt einen zeitlichen Verlauf der Wechselspannung U_{AC} der Wechselspannungsquelle W.

Fig. 2b zeigt einen zeitlichen Verlauf der gleichgerichteten Wechselspannung nach der Gleichrichtereinrichtung G.

Fig. 2c zeigt einen Verlauf der Gegenspannung der Umrichtereinrichtung U nach der Induktivität L.

Fig. 2d zeigt einen Verlauf des Ladestroms des elektrischen Energiespeichers (Batterieladestrom) B.

Eine mögliche Abwandlung der erfindungsgemäßen Vorrichtung 100 sieht vor, dass die Wicklungsinduktivitäten des Elektromotors M als Induktivität L genutzt werden. In diesem Fall kann die externe Induktivität L kleiner dimensioniert oder unter Umständen sogar ganz weggelassen werden. Die Induktivität der Motorwicklungen wird in diesem Fall also ergänzend zur Induktivität L verwendet.

In diesem Fall müssen der Schalter STS der Stromstellereinrichtung TS und der zweite Schalter S4 der zweiten Halbbrücke H2 synchron geschaltet werden. Um eine Nutzung der Wicklungsinduktivitäten zu gewährleisten, müssen die beiden Schalter S1, S2 der ersten Halbbrücke H1 in diesem Fall permanent geöffnet bleiben.

Möglich ist auch ein abwechselndes Schalten der Schalter S3, S4 der zweiten Halbbrücke H2, wobei der Ladestrom für den elektrischen Energiespeicher B in diesem Fall durch zwei Wicklungsinduktivitäten fließt und auf diese Weise die Eingangsinduktivität vergrößert.

Alternativ können auch der zweite Schalter S2 der zweiten Halbbrücke H2 und der zweite Schalter S6 der dritten Halbbrücke H3 überlappend (engl. interleave) geschaltet werden, wodurch vorteilhaft eine Welligkeit (engl. ripple) des Ladestroms verkleinert werden kann. Schließlich ist es auch möglich, die Schalter der beiden Halbbrücken H2 und H3 abwechselnd oder synchron zueinander zu takten. Auf diese Weise kann die Umrichtereinrichtung U aufgrund gleichmäßig verteilter Schalterverluste in den Schaltern S4...S6 vorteilhaft noch höher getaktet werden, was vorteilhaft ebenfalls zu einer Verkleinerung der Welligkeit des Ladestroms führt, aufgrund der Tatsache, dass sich der Ladestrom auf die zwei Halbbrücken H2, H3 aufteilt.

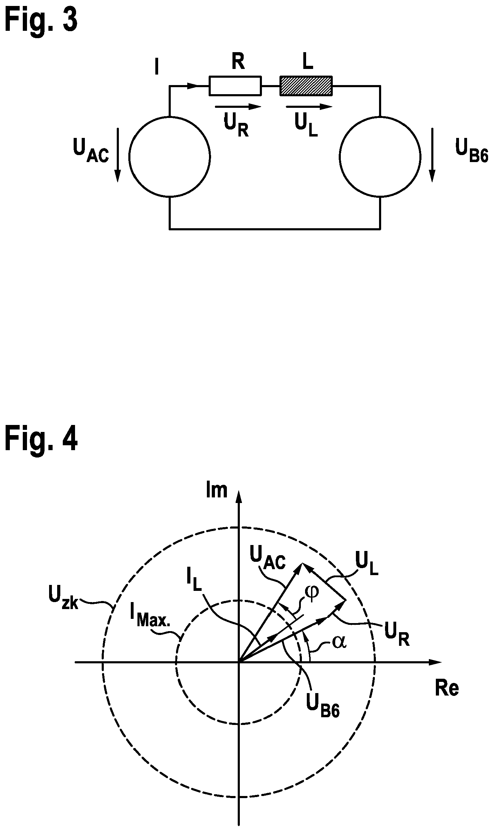

Fig. 3 stellt ein prinzipielles elektrisches Ersatzschaltbild mit elektrischen Größen dar, in denen die galvanische Trennung mittels der Transformatoreinrichtung T nicht berücksichtigt ist. Es ist erkennbar, dass die einzelnen elektrischen Spannungen: U_{AC} (Spannung der Wechselspannungsquelle W), U_{R} (Spannungsabfall infolge Ohmscher Verluste), U_{L} (Spannungsabfall an der Induktivität L) und U_{B6} (Gegenspannung der Umrichtereinrichtung U) eine geschlossene Spannungsmasche bilden und sich zu Null addieren.

Prinzipiell ist somit erkennbar, dass im Falle, dass U_{AC} > U_{B6}, ein Strom I von der Wechselspannungsquelle W in Richtung der Umrichtereinrichtung U und damit in den elektrischen Energiespeicher B fließt. Die Induktivität L dient somit als eine Art Entkopplung zwischen der elektrischen Spannung U_{AC} der Wechselspannungsquelle W und der Gegenspannung U_{B6} der Umrichtereinrichtung U.

Fig. 4 stellt ein Zeigerdiagramm des Ersatzschaltbilds von Fig. 3 dar. Man erkennt, dass mittels der Gegenspannung U_{B6} der Umrichtereinrichtung U der Strom durch die Umrichtereinrichtung U und damit der Ladestrom des elektrischen Energiespeichers B derart gesteuert werden kann, dass er im Wesentlichen phasengleich mit der Eingangswechselspannung U_{AC} ist. Auf diese Weise wird der Umrichter U nicht nur zur Steuerung einer Höhe des Ladestroms verwendet, sondern übernimmt auch die Funktion der herkömmlichen Korrektureinrichtung K.

Aus der Fig. 4 ist ersichtlich, dass durch ein Verändern eines Phasenwinkels α der Gegenspannung U_{B6} ein Phasenwinkel ϕ zwischen dem Ladestrom I und der Spannung der Wechselspannungsquelle U_{AC} im Wesentlichen Null ist. Ein Maximalwert für den Ladestrom ist mit I_{Max} gekennzeichnet. (Frage an den Erfinder: Was ist U_{ZK} in Fig. 4?)

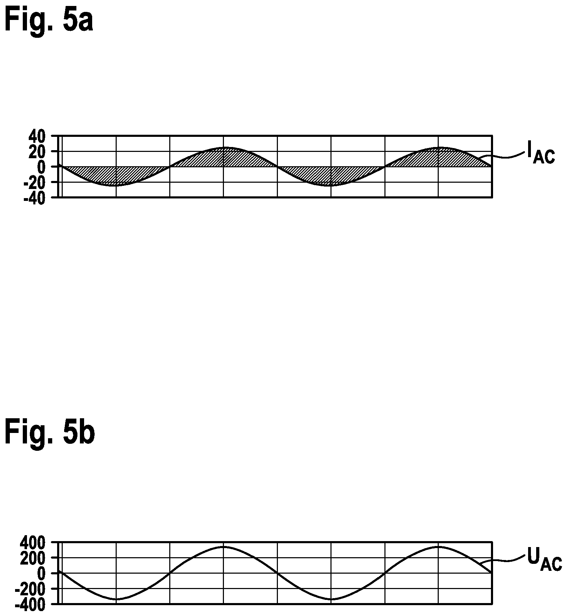

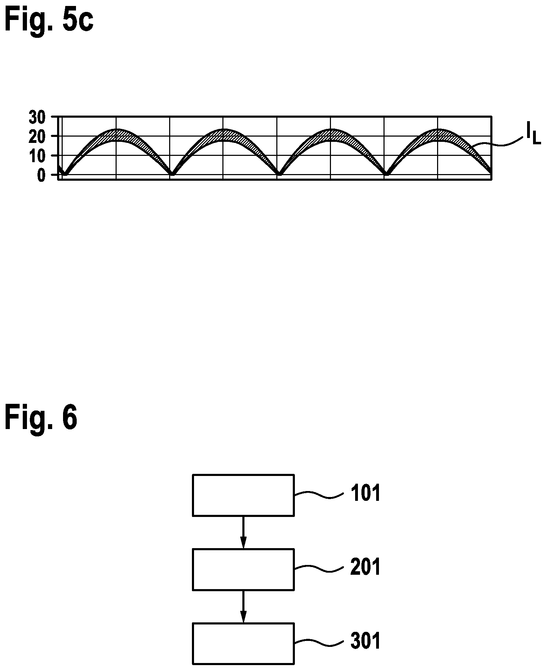

Fig. 5 zeigt mehrere Zeitverläufe von elektrischen Größen der erfindungsgemäßen Vorrichtung.

Fig. 5a zeigt einen zeitlichen Verlauf eines Stroms I_{AC}, der zum Laden des elektrischen Energiespeichers B aus der Wechselspannungsquelle W entnommen wird.

Fig. 5b zeigt einen zeitlichen Verlauf der Wechselspannung U_{AC} der Wechselspannungsquelle W.

Fig. 5c zeigt einen zeitlichen Verlauf des Ladestroms I_{L} durch die Induktivität L.

Es ist also erkennbar, dass der Strom I_{L} durch die Induktivität L, der dem Ladestrom I der Batterie entspricht, im Wesentlichen in Phase mit der Wechselspannung U_{AC} der Wechselspannungsquelle W und dem während eines Ladevorgangs aus der Wechselspannungsquelle W entnommenen Strom I_{AC} ist, was vorteilhaft eine geringe Störung des Wechselspannungsnetzes durch Oberwellen bedeutet.

Fig. 6 zeigt ein prinzipielles Ablaufdiagramm einer Ausführungsform des erfindungsgemäßen Verfahrens:
In einem Schritt 101 wird die Eingangswechselspannung gleichgerichtet.

In einem optionalen Schritt 201 wird ein Tiefsetzen bzw. Tiefstellen der gleichgerichteten Eingangswechselspannung nur für den Fall durchgeführt, dass ein Spannungsniveau einer Wechselspannungsquelle höher ist als die Spannung des elektrischen Energiespeichers (B).

Schließlich wird in einem Schritt 301 eine Gegenspannung zur gleichgerichteten Spannung derart generiert, dass eine Spannung (U_{AC}) der Wechselspannungsquelle (W) und ein Strom, der der Wechselspannungsquelle (W) zum Laden des elektrischen Energiespeichers (B) entnommen wird, im Wesentlichen in Phase sind.

Zusammenfassend werden mit der vorliegenden Erfindung eine Vorrichtung und ein Verfahren beschrieben, bei denen es vorteilhaft möglich ist, eine bereits vorhandene Umrichtereinrichtung in einem Ladebetrieb zum Laden einer Batterie zu verwenden. Auf diese Weise wird eine Funktionalität einer Oberwellenverbesserungsvorrichtung in die Umrichtereinrichtung verlagert, so dass insgesamt eine kostengünstigere Realisierung der Ladevorrichtung ermöglicht ist. Vorteilhaft ist für die Realisierung der des Batterieladesystems keine galvanische Trennung mittels einer Transformatoreinrichtung erforderlich. Mittels der Umrichtereinrichtung kann ein Ladestrom für die Batterie gesteuert werden. Zusätzlich kann mittels der Umrichtereinrichtung auch die PFC (engl. Power Factor Correction)-Funktionalität ohne zusätzliche Bauteile realisiert werden.

## Patentansprüche

1. Vorrichtung (100) zum Laden eines elektrischen Energiespeichers (B) aus einer Wechselspannungsquelle (W), aufweisend:
- eine Gleichrichtereinrichtung (G), welche elektrisch an die Wechselspannungsquelle (W) anschliessbar ist, mit einem parallel zur Gleichrichtereinrichtung (G) verschalteten Kondensator;
- eine mit der Gleichrichtereinrichtung (G) verschaltete Stromstellereinrichtung (TS);
- eine mit der Stromstellereinrichtung (TS) über eine Induktivität (L) verschaltete Umrichtereinrichtung (U) mit wenigstens einer ersten Halbbrücke (H1) mit zwei seriell geschalteten Schaltern (S1, S2); wobei die zwei seriell geschalteten Schalter aus einem ersten Schalter (S1) und einem zweiten Schalter (S2) bestehen; wobei an einem Ausgang der Umrichtereinrichtung (U) der elektrische Energiespeicher (B) zur Speicherung von elektrischer Energie anschaltbar ist, und
- wobei die Induktivität (L) mit einem Verbindungspunkt der Schalter (S1,S2) der ersten Halbbrücke (H1) verschaltet ist;
- wobei mittels einer Steuerungseinrichtung (10) in Abhängigkeit von der Spannung der Wechselspannungsquelle (W) und einem Strom durch die Induktivität (L) der Schalter (STS) der Stromstellereinrichtung (TS) und der zweite Schalter (S2) der ersten Halbbrücke (H1) der Umrichterereinrichtung (U) derart schaltbar sind, dass ein zum Laden des elektrischen Energiespeichers (B) der Wechselspannungsquelle (W) entnommener Strom und eine Spannung (U_{AC}) der Wechselspannungsquelle (W) im Wesentlichen in Phase sind;
**dadurch gekennzeichnet, dass** die Stromstellereinrichtung (TS) aus einem Schalter (STS) und einer in Sperrrichtung betriebenen Diode besteht, wobei der zweite Schalter (S2) mit der Kathode der in Sperrrichtung betriebenen Diode verbunden ist, und dass die Steuereinrichtung derart gestaltet ist, dass- im Falle, dass die Spannung (U_{AC}) der Wechselstromquelle (W) größer als die Spannung des elektrischen Energiespeichers (B) ist, der Schalter (STS) der Stromstellereinrichtung (TS) und der zweite Schalter (S2) der ersten Halbbrücke (H1) getaktet werden, wobei mittels des getakteten Betätigens des zweiten Schalters (S2) der ersten Halbbrücke (H1) und des Schalters (STS) der Stromstellereinrichtung (TS) eine Gegenspannung nach der Induktivität (L) aufgebaut wird, die einen Ladestrom für den elektrischen Energiespeicher (B) über eine parallel zum Schalter (S1) geschaltete Freilaufdiode treibt; und
- im Falle, dass die Spannung (U_{AC}) der Wechselstromquelle (W) kleiner als die Spannung des elektrischen Energiespeichers (B) ist, der Schalter (STS) der Stromstellereinrichtung (TS) permanent geschlossen ist und lediglich der zweite Schalter (S2) der ersten Halbbrücke (H1) getaktet wird.

2. Vorrichtung nach Anspruch 1, **dadurch gekennzeichnet, dass** jeweils eine Wicklung eines dreiphasigen Elektromotors (M) mit jeweils einem Verbindungspunkt zweier Schalter (S1...S6) einer jeweiligen ersten, zweiten und dritten Halbbrücke (H1, H2, H3) der Umrichtereinrichtung (U) verschaltet ist.

3. Vorrichtung nach Anspruch 2, **dadurch gekennzeichnet, dass** entsprechende Schalter (S4,S6) der zweiten und dritten Halbbrücke (H2, H3) der Umrichtereinrichtung (U) synchronisiert schaltbar sind.

4. Vorrichtung nach Anspruch 2 oder 3, **dadurch gekennzeichnet, dass** die entsprechenden Schalter (S4,S6) der zweiten und dritten Halbbrücke (H2, H3) der Umrichtereinrichtung (U) überlappend schaltbar sind.

## Claims

1. Apparatus (100) for charging an electrical energy store (B) from an AC voltage source (W), having:
- a rectifier device (G), which can be electrically connected to the AC voltage source (W), with a capacitor interconnected in parallel with the rectifier device (G);
- a current controller device (TS) interconnected with the rectifier device (G);
- a converter device (U) interconnected with the current controller device (TS) via an inductor (L), said converter device having at least one first half-bridge (H1) comprising two switches (S1, S2) connected in series;
- wherein the two switches connected in series consist of a first switch (S1) and a second switch (S2);
- wherein the electrical energy store (B) for storing electrical energy is connectable to an output of the converter device (U), and
- wherein the inductor (L) is interconnected with a connection point of the switches (S1, S2) of the first half-bridge (H1);
- wherein, depending on the voltage of the AC voltage source (W) and a current through the inductor (L), the switch (STS) of the current controller device (TS) and the second switch (S2) of the first half-bridge (H1) of the converter device (U) are switchable by means of a controller (10) in such a manner that a current for charging the electrical energy store (B) drawn from the AC voltage source (W) and a voltage (U_{AC}) of the AC voltage source (W) are substantially in phase;
**characterized in that** the current control device (TS) consists of a switch (STS) and a diode which is operated in the reverse direction, wherein the second switch (S2) is connected to the cathode of the diode operated in the reverse direction, and **in that** the controller is configured in such a manner that
- if the voltage (U_{AC}) of the AC source (W) is greater than the voltage of the electrical energy store (B), the switch (STS) of the current control device (TS) and the second switch (S2) of the first half-bridge (H1) are clocked, wherein a back-EMF to the inductor (L), which drives a charging current for the electrical energy store (B) via a freewheeling diode connected in parallel with the switch (S1), is built up by means of the clocked actuation of the second switch (S2) of the first half-bridge (H1) and the switch (STS) of the current control device (TS); and
- if the voltage (U_{AC}) of the AC source (W) is less than the voltage of the electrical energy store (B), the switch (STS) of the current control device (TS) is permanently closed and only the second switch (S2) of the first half-bridge (H1) is clocked.

2. Apparatus according to Claim 1, **characterized in that** in each case one winding of a three-phase electric motor (M) is interconnected with in each case one connection point of two switches (S1...S6) of a respective first, second and third half-bridge (H1, H2, H3) of the converter device (U).

3. Apparatus according to Claim 2, **characterized in that** corresponding switches (S4, S6) of the second and third half-bridges (H2, H3) of the converter device (U) are switchable in a synchronized manner.

4. Apparatus according to Claim 2 or 3, **characterized in that** the corresponding switches (S4, S6) of the second and third half-bridges (H2, H3) of the converter device (U) are switchable in an interleaved manner.

## Revendications

1. Arrangement (100) pour charger un accumulateur d'énergie électrique (B) à partir d'une source de tension alternative (W), comprenant :
- un dispositif redresseur (G) qui peut être relié électriquement à la source de tension alternative (W), avec un condensateur branché en parallèle avec le dispositif redresseur (G) ;
- un dispositif de réglage du courant (TS) connecté au dispositif redresseur (G) ;
- un dispositif convertisseur (U) connecté au dispositif de réglage du courant (TS) par le biais d'une inductance (L), comprenant au moins un premier demi-pont (H1) et comprenant deux commutateurs (S1, S2) branchés en série ;
les deux commutateurs branchés en série se composant d'un premier commutateur (S1) et d'un deuxième commutateur (S2) ;
l'accumulateur d'énergie électrique (B) pouvant être raccordé à une sortie du dispositif convertisseur (U) en vue de l'accumulation d'énergie électrique, et
- l'inductance (L) étant connectée à un point de liaison des commutateurs (S1, S2) du premier demi-pont (H1) ;
- le commutateur (STS) du dispositif de réglage du courant (TS) et le deuxième commutateur (S2) du premier demi-pont (H1) du dispositif convertisseur (U) pouvant être commutés au moyen d'un dispositif de commande (10) en fonction de la tension de la source de tension alternative (W) et d'un courant à travers l'inductance (L) de telle sorte qu'un courant prélevé de la source de tension alternative (W) pour charger l'accumulateur d'énergie électrique (B) et une tension (U_{AC}) de la source de tension alternative (W) sont sensiblement en phase ; **caractérisé en ce que** le dispositif de réglage du courant (TS) se compose d'un commutateur (STS) et d'une diode fonctionnant dans le sens de non-conduction, le deuxième commutateur (S2) étant relié à la cathode de la diode fonctionnant dans le sens de non-conduction, et **en ce que** le dispositif de commande est configuré de telle sorte que dans le cas où la tension (U_{AC}) de la source de tension alternative (W) est supérieure à la tension de l'accumulateur d'énergie électrique (B), le commutateur (STS) du dispositif de réglage du courant (TS) et le deuxième commutateur (S2) du premier demi-pont (H1) sont cadencés, l'actionnement cadencé du deuxième commutateur (S2) du premier demi-pont (H1) et du commutateur (STS) du dispositif de réglage du courant (TS) permettent d'établir une tension opposée après l'inductance (L), laquelle produit un courant de charge pour l'accumulateur d'énergie électrique (B) par le biais d'une diode de roue libre branchée en parallèle avec le commutateur (S1) ; et
- dans le cas où la tension (U_{AC}) de la source de tension alternative (W) est inférieure à la tension de l'accumulateur d'énergie électrique (B), le commutateur (STS) du dispositif de réglage du courant (TS) est fermé en permanence et seul le deuxième commutateur (S2) du premier demi-pont (H1) est cadencé.

2. Arrangement selon la revendication 1, **caractérisé en ce qu'**un enroulement d'un moteur électrique (M) triphasé est respectivement connecté à un point de liaison de deux commutateurs (S1...S6) d'un premier, d'un deuxième et d'un troisième demi-pont (H1, H2, H3) respectif du dispositif convertisseur (U).

3. Arrangement selon la revendication 2, **caractérisé en ce que** les commutateurs (S4, S6) correspondants des deuxième et troisième demi-ponts (H2, H3) du dispositif convertisseur (U) peuvent être commutés de manière synchronisée.

4. Arrangement selon la revendication 2 ou 3, **caractérisé en ce que** les commutateurs (S4, S6) correspondants des deuxième et troisième demi-ponts (H2, H3) du dispositif convertisseur (U) peuvent être commutés de manière superposée.
